# EUROPEAN PATENT SPECIFICATION

(11) **EP 1 591 976 B1**
(45) Date of publication and mention of the grant of the patent: **22.12.2010**
(21) Application number: 05103543.4
(22) Date of filing: 28.04.2005
(51) Int. Cl.: G08B 13/16, B60R 25/10

(54) **Intrusion detection device for spaces**
Eindringdetektionsvorrichtung für Räume
Dispositif de détection d'intrusion dans un espace

(30) Priority: 30.04.2004 IT MO20040094
(43) Date of publication of application: 02.11.2005
(73) Proprietor: Meta System S.p.A., 42124 Reggio Emilia (IT)
(72) Inventor: Simonazzi, Giuseppe, 42100 Reggio Emilia (MO) (IT)
(74) Representative: Brunacci, Marco

(56) References cited:
- DE-A1- 3 003 887
- DE-C1- 19 521 511
- US-A- 5 229 748
- US-A- 5 598 141
- US-A- 5 677 666

## Description

The present invention relates to a highly versatile intrusion detection device for spaces. More particularly, the invention relates to an intrusion detection device for spaces in general and in particular for vehicles of any type, both convertible and sedan, that does not need to diversify the installed device.

As it is known, the growing number of thefts, particularly of cars, has induced most car manufacturers to install anti-theft systems directly at the factory or, if these systems are not already installed by the manufacturer, has forced substantially all users to install an anti-theft system after purchasing the vehicle.

Currently existing anti-theft systems for vehicles are divided into intrusion prevention systems, which are suitable to detect and indicate any intrusions into a controlled volume, and engine locking systems.

Different types of sensor, such as microwave or ultrasound sensors, are normally used in intrusion prevention systems.

Microwave sensors are complicated and expensive and also difficult to manage, since the waves are reflected by metallic objects and can cause false alarms.

Microwave systems are normally used for convertible vehicles.

In the case of closed vehicles, ultrasound systems are instead used which operate in an opposite mode, cannot be applied to convertible models and lose their effectiveness if the vehicle, despite being of the sedan type, has for example its windows lowered.

In all these situations, known ultrasound systems are in fact unsuitable, since they can detect movements that occur outside said vehicles.

From patent documents DE 30 03 887 A1; US 5,677,666; DE 195 21 511 C1; US 5, 598,141; and US 5,229,748 there are known a lot of solutions based on the use of ultrasound for monitoring a space, and in particular for detecting an intrusion into the interior of a vehicle.

However even these known solutions appear to request further improvements so as to be fit to be installed, in particular on cars and vehicles of the convertible type, in order to detect intrusions occurring into a open space.

The aim of the present invention is to provide a highly versatile intrusion detection device for spaces and particularly for vehicles that can be used equally on convertible vehicles and on closed vehicles, since it is capable of detecting an intrusion into the region directly in the vicinity of the sensor that is used, ignoring what happens outside said region.

Within this aim, an object of the present invention is to provide an intrusion detection device that allows to reduce substantially to zero false alarms caused by incorrect sensing.

Another object of the present invention is to provide an intrusion detection device in which the sensors used are substantially insensitive to position variations of the internal parts of the space or vehicle cabin, such as for example adjustments of the seats or of the steering wheel.

Another object of the present invention is to provide an intrusion detection device that is highly reliable, relatively simple to provide and at competitive costs.

This aim and these and other objects that will become better apparent hereinafter are achieved by an intrusion detection device for spaces, which has all the features defined by the main independent claim 1 and by a method for detecting intrusions in spaces as defined by claim 5.

Further characteristics and advantages of the invention will become better apparent from the following detailed description of a preferred but not exclusive embodiment of the device according to the present invention, illustrated by way of non-limiting example in the accompanying drawings, wherein:

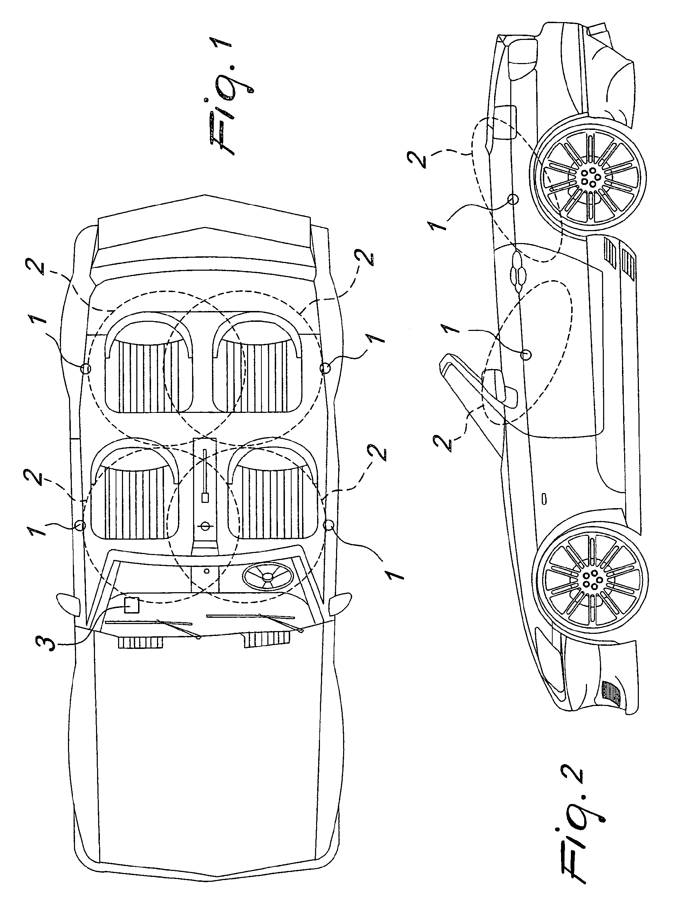

Figure 1 is a view of the intrusion detection device according.to the present invention applied to a motor vehicle; and
Figure 2 is a top plan view of the intrusion detection device according to the present invention shown in Figure 1 together with the vehicle.

The device is illustrated and described with reference by way of example to a car. It is of course understood that the application can be extended without any modification to public or private spaces in general.

With reference to the figures, an intrusion detection device for spaces in general and for vehicles in particular according to the invention comprises at least one sensor of the ultrasound type that is hermetic, has an asymmetric emission lobe, and is controlled and operates in echo mode.

Conveniently, there is a plurality of said sensors, which can be fixed to the doors, below the dashboard, to the posts of the windshield, et cetera. The sensors must be installed so that their emission surface faces the region to be protected.

The distribution of the sensors is variable according to the shape of the environment to be controlled.

The emissions surface is metallic, hermetic and easily adaptable to the type of vehicle interior.

The arrangement of the sensors is such as to allow the asymmetric sensing lobe to cover the maximum volume inside the vehicle without however leaving the perimeter of said vehicle.

The sensors are of the transceiver type.

In the figures, the sensors are designated by the reference numeral 1 and the associated lobes are shown in dashed lines and designated by the reference numeral 2.

Each sensor 1 is suitable to monitor a portion of the vehicle cabin and to emit, sequentially with respect to the other sensors, a brief ultrasound transmission.

Immediately after the transmission, the sensor is used in receive mode in order to detect the ultrasound echo signal that is reflected by the obstacles inside the vehicle.

Since sound has a predefined speed (on the order of 340 m/s), by analyzing the echo signal for a preset time interval it is possible to exclude from the analysis obstacles that are too distant from the sensors, since the reflection of the echo thereon is received with a delay that is longer than the delay that is preset for considering the echo as "useful".

The echo signal related to the region to be protected, in the form of its envelope, is then completely stored by means of a control unit with microprocessor, schematically designated by the reference numeral 3 in the figures.

If no foreign object enters the protected region, the echoes received from periodic and successive transmissions have a stable and consistent form, indicating that no alarm has to be issued.

The repeat frequency of the echo monitoring should be high enough to detect even short-lasting intrusions.

If instead an object enters the protected region, the envelope of the received echo is altered and changes over time from one transmission to the next. These variations are evaluated by the microprocessor 3, which on the basis of a specific algorithm decides whether to issue or not signals indicating intrusions in progress, depending on the type of variation and optionally on the correlation between the signals of all or some of the sensors 1.

The device thus provided is insensitive to variations in the position of the internal parts of the vehicle, such as for example to the adjustment of the position of the seats and/or of the steering wheel. When the system is activated, i.e., where the anti-theft system is armed, the device autonomously learns the current shapes of the echoes received by the various sensors and considers them as reference echoes for detecting intrusions.

Substantially, the acquired references are used to compare the subsequent echoes, so as to verify whether variations in the shape of the received echoes are occurring.

These references can in any case be slowly updated or corrected in order to allow the device to tolerate variations caused by external elements, such as temperature changes, wind, ultrasonic external noise, or others.

In practice, the device analyzes the received echo in order to compare it with at least one reference echo, so as to verify whether the difference between the detected echo and the reference echo lies within a preset value range; if the difference is not within said preset range, it issues an alarm signal, for example of the visual or acoustic type.

Echo analysis comprises analyzing the echoes received within a preset reception time, in order to verify whether the reception time exceeds a preset threshold.

The device can also be adapted to strong environmental variations simply by sending to each sensor the functional parameters, such as for example the echo analysis time that determines the depth of the protected region, when the device is activated.

The device provides the possibility to reduce the consumption of current absorbed by the battery by spreading out the echo verifications on each sensor 1 or by verifying its echoes with a reduced sampling or by performing the echo only on some of the sensors 1, which in this case operate with differentiated parameters (for example, it is possible to operate one sensor in the front part of the vehicle and one sensor in the rear part, with such a lobe depth as to cover the side that lies opposite to its fixing point).

If one of the sensors 1 detects a minimal variation, the system immediately returns to a detailed analysis of the signals in order to check for a possible intrusion.

Substantially, in this case, the power-save mode is abandoned in order to resume sampling at the normal rate.

All the sensors 1 can be connected to a single module, which contains an entire electronic circuit for driving the sensors and for analyzing the signals.

As an alternative, each sensor 1 can be provided with an electronic circuit, which receives the echo execution command from the central processing unit, which in turn receives information from the sensors regarding the characteristics of the received echoes. The bidirectional signal for communication between said control unit and the sensors 1 is of the logic and encoded type, so that a single connecting cable allows communication among all the components of the device.

In practice it has been found that the anti-theft device according to the present invention fully achieves the intended aim and objects stated above, since it allows to provide a volumetric protection of convertible and closed vehicles without having to differentiate the types of sensors as normally occurs with known types of anti-theft device.

The device thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An intrusion detection device for spaces, comprising at least one intrusion detection sensor (1), which consists of an ultrasound sensor (1) that is suitable to emit/transmit an ultrasound signal and to operate in an echo receiving mode for receiving a corresponding ultrasound echo signal,
said device compring a microprocessor-based control unit (3) which is adapted to control said at least one ultrasound sensor (1) and to analyze for a preset time interval, after transmission of said ultrasound signal, the corresponding ultrasound echo signal received by said ultrasound sensor (1), so as to detect an intrusion only into a region (2) in the vicinity of said ultrasonic sensor (1) while ignoring what happens outside said region (2),
wherein said ultrasound sensor (1) is of the type having an asymmetric emission lobe (2) having to subtantially an ellipsoidal shape.

2. The device according to claim 1, **characterized in that** said at least one intrusion detector sensor (1) is of the transceiver type.

3. A device according to claims 1 or 2, wherein it is arranged for detecting intrusions into the interior of a vehicle, whereby said device is suitable for use equally on closed vehicles and on convertible vehicles.

4. A vehicle comprising an intrusion detection device according to any of claims 1 to 3.

5. A method for detecting intrusion in spaces, in particular into the interior of a vehicle, comprising the steps of:
activating at least one ultrasound sensor (1) for emitting/transmitting an ultrasound signal, said ultrasound sensor (1) being of the type with an asymmetric emission lobe (2) having to subtantially an ellipsoidal shape and adapted to operate in echo mode;
receiving by said at least one ultrasound sensor (1), after transmission of said ultrasound signal and while said ultrasound sensor (1) operates in said echo mode, an echo generated by reflection of said ultrasound signal; and
detecting and analysing said echo received by said at least one ultrasound sensor (1) within a preset reception time, so as to detect intrusions only into a region (2) in the vicinity of said ultrasound sensor (1) while ignoring what happens outside said region (2).

6. The method according to claim 5, further including the step of:
comparing the detected echo, received by said ultrasound sensor (1), with at least one reference echo, in order to verify whether the difference between said detected echo and said reference echo is within a preset value range; and
issuing an alarm signal, if the difference is not within said preset value range.

7. The method according to claim 6, **characterized in that** it comprises an initial step that consists of the autonomous learning, on the part of said at least one sensor (1), of the current shapes of the echoes received by said at least one sensor (1) and of considering said shapes as reference echoes.

8. The method according to claim 6, **characterized in that** it comprises a step that consists in sending to said at least one ultrasound sensor functional parameters in order to adapt the operation of said at least one ultrasound sensor (1) to environmental variations.

9. The method according to any of claims 6 to 8, **characterized in that** it comprises a step that consists in reducing current consumption of said at least one ultrasound sensor (1) by spreading out the verifications of the echoes on said at least one sensor.

## Patentansprüche

1. Eindringdetektionsvorrichtung für Räume, mit mindestens einem Eindringdetektionssensor (1), der aus einem Ultraschallsensor (1) besteht, der geeignet ist, ein Ultraschallsignal zu emittieren/zu senden und in einem Echoempfangsmodus zum Empfangen eines entsprechenden Ultraschallechosignals zu arbeitet,
wobei die Vorrichtung eine Steuereinheit (3) auf Mikroprozessorbasis aufweist, die angepasst ist, den mindestens einen Ultraschallsensor (1) zu steuern und für einen voreingestellten Zeitabstand nach dem Senden des Ultraschallsignals das entsprechende, durch den Ultraschallsensor (1) empfangene Ultraschallechosignal zu analysieren, um ein Eindringen nur in einen Bereich (2) in der Nachbarschaft des Ultraschallsensors (1) zu detektierten, während er ignoriert, was außerhalb des Bereichs (2) geschieht,
wobei der Ultraschallsensor (1) von der Art ist, die eine asymmetrische, im Wesentlichen ellipsenähnlich geformte Emissionskeule (2) besitzt.

2. Vorrichtung gemäß Anspruch 1, **dadurch gekennzeichnet, dass** der mindestens eine Eindringdetektionssensor (1) von der Art eines Sende-Empfangsgxrätes ist.

3. Vorrichtung gemäß Anspruch 1 oder 2, die für das Detektieren von Eindringversuchen in den Innenraum eines Fahrzeugs angeordnet ist, wobei die Vorrichtung gleichermaßen für den Einsatz in geschlossenen Fahrzeugen und in Cabriolets geeignet ist.

4. Fahrzeug mit einer Eindringdetektionsvorrichtung gemäß einem der Ansprüche 1 bis 3.

5. Verfahren zum Delektieren von Eindringversuchen in Räume, besonders in den Innenraum eines Fahrzeugs, das folgende Schritte aufweist:
Aktivieren mindestens eines Ultraschallsensors (1) zum Emittieren/Senden eines Ultraschallsignals, wobei der Ultraschallsensor (1) von der Art mit einer symmetrischen, im Wesentlichen ellipsenahnlich geformten Emissionskeule (2) und angepasst ist, im Echomodus zu arbeiten;
Empfangen, durch den mindestens einen Ultraschallsensor (1) nach dem Senden des Ultraschallsignals und während der Ultraschallsensor (1) im Echomodus arbeitet, eines durch Reflektion des Ultraschallsignals erzeugten Echos; und
Detektieren und Analysieren des durch den mindestens einen Ultraschallsensor (1) empfangenen Echos innerhalb einer voreingestellten Empfangszeit, um Eindringversuche nur in einen Bereich (2) in der Nachbarschaft des Ultraschallsensors (1) zu detektieren, während er ignoriert, was außerhalb des Bereichs (2) geschieht.

6. Verfahren gemäß Anspruch 5, das ferner folgenden Schritt aufweiset:
Vergleichen des detektierten, durch den Ultraschallsensor (1) empfangenen Echos mit mindestens einem Referenzecho, um zu prüfen, ob die Differenz zwischen dem detektierten Echo und dem Referenzecho in einem voreingestellten Wertebereich liegt; und
Ausgeben eines Alarmsignals, falls die Differenz nicht innerhalb des voreingestellten Wertebereichs liegt.

7. Verfahren gemäß Anspruch 6, **dadurch gekennzeichnet, dass** es einen anfangsschritt aufweist, der aus dem autonomen Erlernen seitens des mindestens einen Sensors (1) der tatsächlichen Formen der durch den mindestens einen Sensor (1) empfangenen Echos und dem Betrachten der Formen als Referenzechos besteht.

8. Verfahren gemäß Anspruch 6, **dadurch gekennzeichnet, dass** es einen Schritt aufweiset, der im Senden von Funktionsparametern zu dem mindestens einen Ultraschallsensor besteht, um den Betrieb des mindestens einen Ultraschallsensors (1) an Änderungen in der Umgebung anzupassen.

9. Verfahren gemäß einem der Ansprüche 6 bis 8, **dadurch gekennzeichnet, dass** es einen Schritt aufweiset, der im Senken des Stromverbrauchs des mindestens einen Ultraschallsensors (1) durch Ausbreiten der Überprüfungen der Echos an dem mindestens einen Sensor besteht.

## Revendications

1. Dispositif de détection d'intrusion pour des volumes donnés, comprenant au moins un capteur (1) pour la détection d'intrusion, qui se composte d'un capteur à ultrasons (1) qui est apte à émettre/transmettre une signal ultrasonore et à fonctionner en mode récepteur d'écho afin de recevoir un signal d'écho ultrasonore correspondant,
ledit dispositif comprenant une unité (3) de commande à microprocesseur qui est apte à commander ledit au moins un capteur à ultrasons (1) et à analyser perdant un intervalle de temps prescrit, après la transmission dudit signal ultrasonore, le signal d'écho ultrasonore correspondant reçu par ledit capteur à ultrasons (1) de manière à ne détecter une intrusion que dans une zone (2) au voisinage dudit capteur à ultrasons (1) tout en ignorant ce qui se passe à l'extérieur de ladite zone (2),
dans lequel ledit capteur à ultrasons (1) est du type ayant un lobe d'émission asymétrique (2) ayant une forme essentiellement ellipsoïde.

2. Dispositif selon la revendication 1, ***caractérisé en ce que*** ledit au moins un capteur (1) détecteur d'intrusion est du type émetteur-récepteur.

3. Dispositif selon les revendications 1 ou 2, qui est agencé pour détecter des intrusions à intérieur d'un véhicule, ledit dispositif étant apte à une utilisation aussi bien sur des véhicules couverts que sur des véhicules décapotables.

4. Véhicule comprenant un dispositif de détection d'intrusion selon l'une quelconque des revendications 1 à 3.

5. Procédé de détection d'intrusion dans des volumes données, en particulier à l'intérieur d'un véhicule, comprenant les étapes de :
activation d'au moins un capteur à ultrasons (1) pour émettre/transmettre un signal ultrasonore, ledit capteur à ultrasons (1) étant du type à lobe d'émission asymétrique (2) ayant une forme essentiellement ellipsoïde et apte à fonctionner en mode écho ;
réception par ledit au moins un capteur à ultrasons (1), après transmission dudit signal à ultrasons et pendant que ledit capteur à ultrasons (1) fonctionne sous ledit mode écho, d'un écho généré par réflexion dudit signal à ultrasons ; et
détection et analyse dudit écho reçu par ledit au moins un capteur à ultrasons (1) dans un intervalle de temps prescrit, afin de ne détecter des intrusions que dans une zone (2) située au voisinage dudit capteur à ultrasons (1) tout en ignorant ce qui se passe à l'extérieur de ladite zone (2).

6. Procédé selon la revendication 5, comprenant en outre l'étape de :
comparaison de l'écho détecté, reçu par ledit capteur à ultrasons (1), avec au moins un écho de référence, de manière à vérifier si la différence entre ledit écho détecté et ledit écho de référence est dans une plage de valeurs prescrites ; et
émission d'un signal d'alarme si la différence n'est pas dans ladite plage de valeurs prescrites.

7. Procédé selon la revendication 6, ***caractérisé en ce qu*'**il comprend une étape initiale qui consiste en l'apprentissage autonome, de la part dudit au moins un capteur (1), des formes courantes des échos reçus par ledit au moins un capteur (1) et à considérer lesdites formes comme des échos de référence.

8. Procédé selon la revendication 6, ***caractérisé en ce qu*'**il comprend une étape qui consiste en l'envoi audit au moins un capteur à ultrasons, de paramètres fonctionnels de manière à adapter le fonctionnement dudit au moins un capteur à ultrason (1) à des variations environnementales.

9. Procédé selon l'une quelconque des revendications 6 à 8, ***caractérisé en ce qu*'**il comprend une étape qui consiste à réduire la consommation d'énergie dudit au moins un capteur à ultrasons (1) en étalant les vérifications des échos sur ledit au moins un capteur.
